Europäisches Patentamt

European Patent Office

Office européen des brevets

(11) Veröffentlichungsnummer: **0 373 250**
**A1**

# (12) EUROPÄISCHE PATENTANMELDUNG

(21) Anmeldenummer: 88121044.7

(22) Anmeldetag: 15.12.88

(51) Int. Cl.⁵· **F16L 37/00**

(43) Veröffentlichungstag der Anmeldung:
20.06.90 Patentblatt 90/25

(84) Benannte Vertragsstaaten:
**DE GB**

(71) Anmelder: **Siemens Aktiengesellschaft**
**Wittelsbacherplatz 2**
**D-8000 München 2(DE)**

(72) Erfinder: **Gjessing, Harald**
**Jonas Liesvei 14**
**N-3600 Kongsberg(NO)**
Erfinder: **Haugen, Finn Germand**
**Storengsvei 7**
**N-3670 Notodden(NO)**
Erfinder: **Lauvli, Asmund**
**Haavengen**
**N-3600 Kongsberg(NO)**

(54) **Anordnung und Verfahren zum Kuppeln von zwei je einen Flansch aufweisenden Körpern, insbesondere von zwei Rohren unter Wasser.**

(57) Zwischen den zu kuppelnden Flanschen (18) ist eine Dichtungsscheibe (1) mit einem doppel-T-förmigen Querschnitt angeordnet. Die Flansche (18) sind durch Klemmbackenhälften (13, 13') zusammengehalten, welche die Flansche (18) sowie die Dichtungsscheibe (1) übergreifen. Die Dichtungsscheibe (1) hat an den Innenseiten der Auskragungen kegelstumpfförmige Anlageflächen (8), welche die mit einer kegelstumpfförmigen Umfangsfläche (19) versehenen Flansche (18) übergreifen. An der Dichtungsscheibe (1) ist zusätzliche zu einem zentralen Dichtungselement (9) mindestens ein weiteres Dichtungselement (10) und ein Positionierzapfen (20) angeordnet. Für die ferngesteuerte Montage bzw. Demontage ist ein Werkzeug vorgesehen, das mittels einem Hebeeinrichtung vor Ort gebracht wird und ein Gestell (22) besitzt, an dem ein Träger (28) für die Kupplungsteile (30) und ein Positioniergerät (32) für die zu kuppelnden Körper verschiebbar gelagert sind. Am Gestell (22) sind Mittel zum Heben und Senken sowie eine Einrichtung zum Positionieren und Feststellen angeordnet.

FIG 1

# Anordnung und Verfahren zum Kuppeln von zwei je einen Flansch aufweisenden Körpern, insbesondere von zwei Rohren unter Wasser

Die Erfindung bezieht sich auf eine Anordnung zum Kuppeln zweier Körper und ist insbesondere in der Offshoretechnik anwendbar, wo die zu kuppelnden Körper mit Hilfe von zwei Klemmbackenhälften durch Schrauben zusammengefügt werden.

In Unterwassersystemen, besonders bei Ölfördersystemen, ist es von besonderer Bedeutung, daß die verwendeten Teile so zuverlässig wie möglich sind und daß sie montierbar und auch demontierbar sind, ohne einen Taucher in Anspruch nehmen zu müssen. Dies ist besonders wichtig bei Installationen in tiefen Gewässern. Ein besonderes Problem ist das Kuppeln von Rohren und dergleichen, wo es wichtig ist, eine sichere und dichte Kupplung auch in den Fällen zu erhalten, in denen die Kupplungsstelle wegen der Wassertiefe nur schwer zugänglich ist. Hinsichtlich der hohen Kosten, die bei großen Wassertiefen entstehen, ist es wesentlich, daß die Vorrichtung leicht ist und wenig Platz einnimmt und zuverlässig funktioniert. Die Bedienung muß rasch und einfach von der Meeresoberfläche ausgeführt werden können.

Bei Konstruktionen, die am Meeresboden angebracht sind und im Zusammenhang mit der Förderung von Öl oder Gas eingesetzt werden, ist es üblich, zuerst eine Hauptstruktur zu installieren und danach die Rohre für den Transport von Öl oder Gas (evtl. andere Flüssigkeiten) zu verlegen, um dann die Rohre an spezielle Komponenten zu kuppeln.

Es ist bekannt, über zwei Flansche zwei Kupplungshälften anzubringen, die mit zwei oder vier Schrauben befestigt werden. Diese Ausführung kann für die Unterwassermontage nicht ohne Taucher verwendet werden.

Der vorliegenden Erfindung liegt die Aufgabe zugrunde, eine Anordnung und eine Verfahren zum Kuppen zweier Körper anzugeben, die ohne Einsatz von Personal vor Ort, z.B. in der Offshoretechnik in großer Wassertiefe ohne die Verwendung eines Tauchers, eingesetzt werden kann und die ferner einfach und zuverlässig ist in der Anwendung und bei der Wartung. Darüber hinaus soll die montierte Kupplung kontrollierbar sein.

Diese Aufgabe wird durch eine Anordnung zum fernmontierbaren Kuppeln von zwei je einem Flansch aufweisenden Körpern gelöst, bei der

a) eine Dichtungsscheibe mit einem doppelT-förmigen Querschnitt zwischen den zu kuppelnden Flanschen angeordnet ist,

b) zwei Klemmbackenhälften vorgesehen sind, welche die Flansche sowie die Dichtscheibe übergreifen und mit Öffnungen versehen sind, die in der Ebene der Dichtungsscheibe oder parallel dazu liegen,

c) die Dichtungsscheibe an den Klemmbakkenhälften aufgehängt ist und

d) durch die Öffnungen an den Klemmbakkenhälften Schrauben durchgeführt und die Klemmbackenhälften durch Muttern verspannt sind.

Bei einem Verfahren zum Kuppeln von zwei je einen Flansch aufweisenden Körpern, insbesondere von zwei Rohren unter Wasser, mit einem fernsteuerbaren, als Gestell ausgebildeten Werkzeug, an dem ein mit einem Antrieb versehenes Positioniergerät und ein mit einer Antriebseinheit ausgerüsteter Träger für Kupplungsteile verschiebbar gelagert sind, die aus einer Dichtungsscheibe und Klemmbackenhälften bestehen, sind Maßnahmen getroffen, nach denen

a) der erste Körper fest angeordnet und der zweite Körper zumindest annähernd fluchtend hierzu beweglich angeordnet wird, wobei die Flansche einen vorgegebenen Abstand aufweisen,

b) die Kupplungsteile an dem Träger angeordnet werden,

c) das Gestell mittels einer Hebeeinrichtung in eine vorgegebene Position über den Flanschen der beiden zu kuppelnden Körper gebracht und fixiert wird,

d) der Träger in eine Lage gebracht wird, in der die Kupplungsteile in einer senkrechten Ebene zwischen den beiden Flanschen zu liegen kommen,

e) das Positioniergerät in eine Lage senkrecht über dem zweiten Körper gebracht wird,

f) das Gestell auf die beiden zu kuppelnden Körper abgesenkt wird, wobei es mit dem fest angeordneten ersten Körper in Eingriff gebracht wird und das Positioniergerät den zweiten Körper erfaßt und ausrichtet,

g) die Kupplungsteile durch Längsverschieben ihres Trägers gegen die Flansche des ersten Körpers geschoben werden, so daß die Dichtungsscheibe an dem Flansch des ersten Körpers anliegt,

h) der zweite Körper mittels des Positioniergerätes durch eine Längsverschiebung gegen die Dichtungsscheibe geschoben wird,

i) die Klemmbackenhälften gegeneinander verschraubt werden und

k) der Träger sowie die Antriebseinheit von den Kupplungsteilen getrennt, das Positioniergerät von dem zweiten Körper gelöst und das Gestell abgehoben wird.

Ausgestaltungen der Erfindung sind in den Unteransprüchen angegeben.

Die Erfindung wird im folgenden an einem Ausführungsbeispiel anhand der Zeichnung näher er

läutert. Es zeigen:

FIG 1 einen Querschnitt durch eine Anordnung zum fernsteuerbaren Kuppeln, die als Unterwasserkupplung für zwei Körper dient, wobei die eine Hälfte im offenen Zustand und die andere Hälfte im gekuppelten Zustand gezeichnet ist,

FIG 2 einen Längsschnitt zu FIG 1,

FIG 3 einen Querschnitt der Unterwasserkupplung, die zwischen zwei Körper eingeführt ist, die verbunden werden sollen,

FIG 4 eine perspektivische Darstellung der Unterwasserkupplung, wobei die einzelnen Teile auseinandergezogen sind,

FIG 5 die Lagerung einer Schraube und

FIG 6 eine Einzelheit der Schraubengewinde.

FIG 7 ein fernbedienbares Werkzeug zum Kuppeln zweier Rohre unter Wasser.

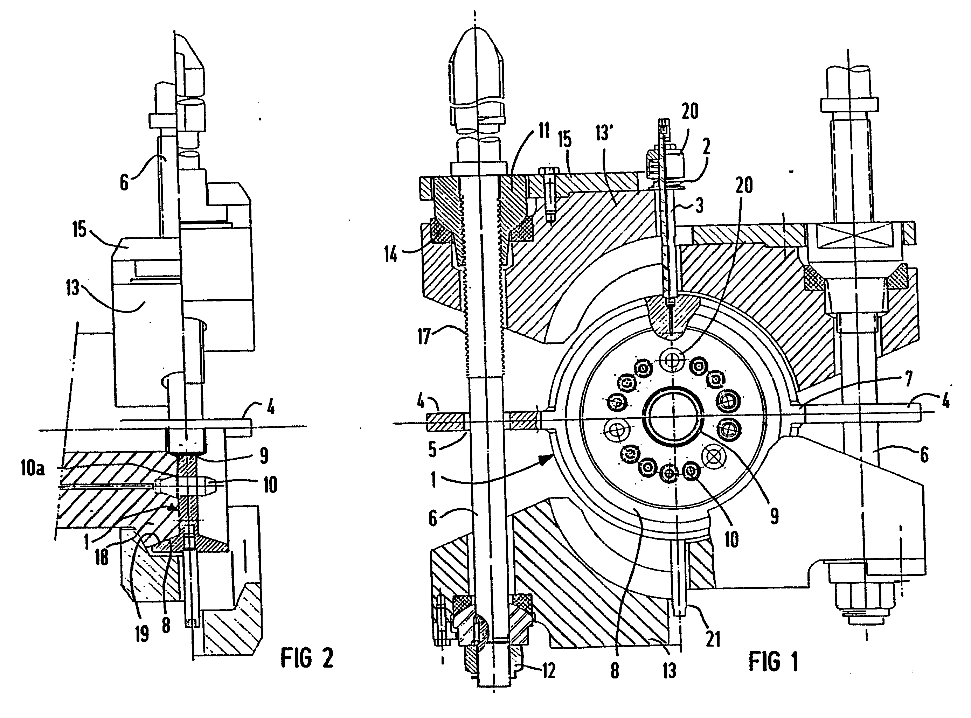

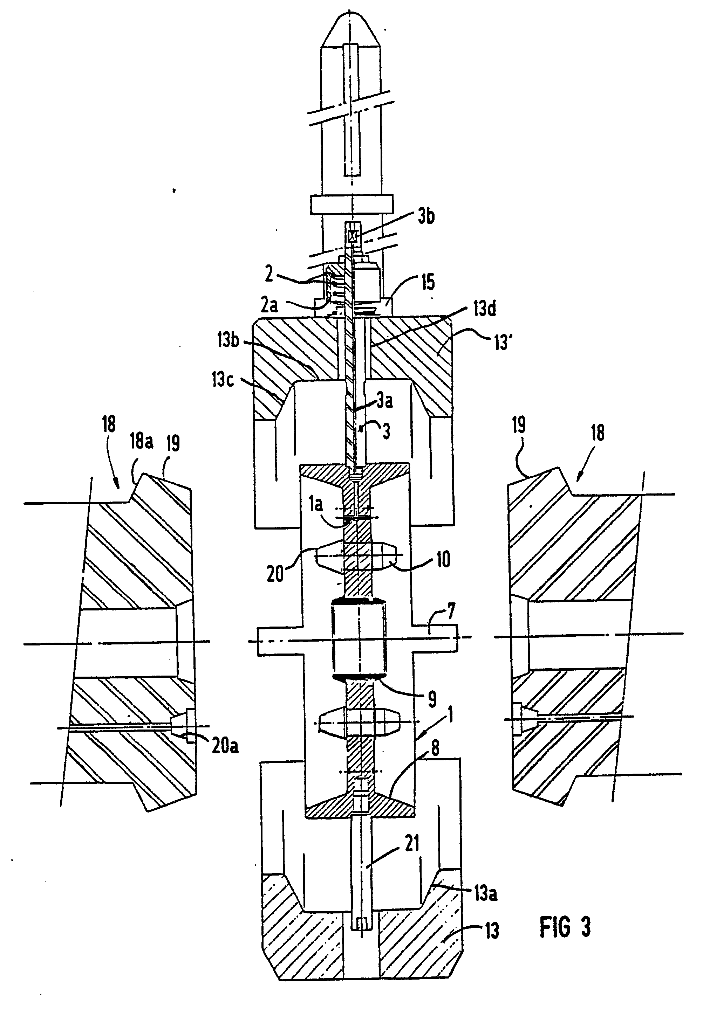

Wie FIG 1, 2 und 3 zeigen, hat die als fernbedienbare Unterwasserkupplung ausgebildete Anordnung eine Dichtungsscheibe 1, die die Abdichtung beim Zusammenkuppeln der Flansche 18 zweier Körper bildet. Diese Dichtungsscheibe 1 hat einen doppel-T-förmigen Querschnitt und ist zwischen den zu kuppelnden Flanschen 18 angeordnet. Klemmbackenhälften 13, 13', welche die Flansche 18 sowie die Dichtscheibe 1 übergreifen, sind mit Öffnungen versehen, die in der Ebene der Dichtungsscheibe 1 oder parallel dazu liegen. Die Dichtungsscheibe 1 hat, um ein zuverlässiges Einführen entsprechend der Erfindung zu erreichen, eine kreuzförmige Aufhängung, die aus der Aufhängestange 3 und Stützstange 21 in der Vertikalrichtung besteht. Die Aufhängestange 3 sowie die Stützstange 21 sind einander gegenüberliegend in einer gemeinsamen Achse angeordnet. In der Horizontalrichtung sind zwei Ohren 4 mit Öffnungen 5 vorgesehen. Die Stützstange 21 und die Aufhängestange 3 sind in Öffnungen an den Klemmbackenhälften 13, 13' beweglich geführt. Durch die Öffnungen an den Klemmbacken 13, 13' und durch die Öffnungen 5 an den Ohren 4 sind Schrauben 6 durchgeführt und die Klemmbackenhälften sind durch Muttern 11 verspannt. Diese Aufhängung gibt der Dichtungsscheibe 1 eine Stütze, so daß sie parallel zu dem Flansch 18 des einen Körpers, z.B. eines Rohres, links in FIG 3, einstellbar ist.

In vorteilhafter Weise ist die durch die Öffnung 13d der Klemmbackenhälften 13' hindurchgeführte Aufhängestange 3 der Dichtungsscheibe 1 mit Spiel aufgehängt, wobei an dem der Dichtungsscheibe 1 abgewandten Ende eine Schulter 2a vorgesehen ist und zwischen der Schulter 2a und dem Klemmbacken 13' ein federndes Element 2 angeordnet ist. Das Spiel in der Aufhängung gibt Raum für die Toleranzen des Systems. In der Höhe, d.h. entlang der Vertikalachse ist durch die Verwendung des federnden Elementes 2 (vorgespannte Feder) eine hohe Genauigkeit erreicht. Der Abstand zum Zentrum der Öffnung 1a der Dichtungsscheibe 1 ist durch den Abstand zu der Schulter 2a der Aufhängungsstange 3 gegeben. Falls die Dichtungsscheibe 1 während des Aufschiebens auf den Flansch 18 zu einer Bewegung nach oben gezwungen wird, wird sie von der Aufhängelage angehoben. Wird sie zu einer Bewegung nach unten gezwungen, so würde die Feder 2 zusammengedrückt werden.

Vorzugsweise haben die Flansche 18 - wie FIG 3 zeigt - eine kegelstumpfförmige Umfangsfläche 19 und die Dichtungsscheibe 1 weist einen die Flansche 18 überragenden Außendurchmesser auf, wobei die Innenseiten der die Flansche 18 übergreifenden Auskragungen als kegelstumpfförmige Anlageflächen 8 ausgebildet sind.

Die Klemmbackenhälften 13, 13' haben an ihren einander zugewandten Innenseiten eine Ringnut 13a, in welche die Flansche 18 und die Dichtungsscheibe 1 hineinragen, wobei die Breite des Nutgrundes 13b zumindest annähernd der äußeren Dicke der Dichtungsscheibe 1 entspricht.

Die seitlichen Nutflächen 13c, welche die Flansche 18 der Klemmbackenhälften 13, 13' übergreifen und zugeordnete Anlageflächen 18a der Flansche 18 sind kegelstumpfförmig ausgebildet.

Die Ohren 4 sind an einer Verlängerung 7 der inneren Anlagefläche 8 der Dichtungsscheibe 1 angeordnet. Diese Anlageflächen 8 sind wesentlich für das Positionieren der Dichtungsscheibe 1 auf dem Flansch 18, d.h. in Verbindung mit der Ausbildung der Umfangsfläche 19 des Flansches wird es ermöglicht, die "Fangkapazität" bis über das Doppelte zu steigern.

Die Dichtungsscheibe 1 hat mehrere Funktionen. Sie hilft zum einen bei der Zentrierung der Flansche 18. Zum anderen dient sie als Halteeinrichtung oder Anbringungseinrichtung für alle einzelnen Dichtungen, die auf der Zeichnung beispielsweise mit den Nummern 9 und 10 dargestellt sind. Das bedeutet, daß alle Dichtungen an die Wasseroberfläche gebracht werden können, falls ein Leck entstehen sollte oder bei anderen Unregelmäßigkeiten. Zusätzlich ergibt sich bei der Anbringung der Dichtungen an der Dichtungsscheibe die Möglichkeit, die Dichtungen von der Außenseite einem Drucktest zu unterwerfen.

Von den beiden Schrauben 6, die die Klemmenhälften zusammenziehen, ist die eine rechts- und die andere linksgängig. Der Vorteil dieser Einrichtung liegt darin, daß die Drehmomente, die erforderlich sind, um die Schrauben 6 fernbedient anzuziehen, in entgegengesetzter Richtung ausgeübt werden und sich daher gegenseitig aufheben, so daß externe Kräfte ganz oder teilweise vermieden werden. An den Enden der Schrauben 6 ist eine Mutter 11 bzw. ein als Mutter ausgebildeter Kopf 12 angebracht. Der Kopf 12 ist an dem unteren Ende an der Schraube 6 befestigt und dreht sich mit dieser. Die obere Mutter 11 ist in der oberen Klemmenhälfte 13 versenkt angeordnet und wird in Richtung der Schraubenachse bewegt, wenn diese gedreht wird. Die Berührungsfläche 14 der Mutter 11 gegen die Klemmbacken 13 ist halbkugelig. Das Zentrum für den kugeligen Teil liegt in der Mitte der Halteplatte 15, der ein Teil der oberen Klemmbackenhälfte 13 ist. An diesem Teil der Mutter 11 sind zwei ebene Flächen 16 herausgefräst, so daß sie in Öffnungen der Halteplatte 15 passen, die verhindert, daß sich die Mutter 11 dreht. Es stehen sehr große Drehmomente zur Verfügung, um die Schrauben 6 anzuziehen oder lozudrehen. Diese Momente werden aufgrund der Reibung an die Mutter 11 übertagen. Das Haltemoment für die Mutter 11 ist daher sehr hoch. Es ist wichtig, daß man ein möglichst sauberes Drehmoment erzielt. Dies wird durch an zwei gegenüberliegenden Seiten der Mutter 11 vorgesehene Anschläge erreicht. Ein nur auf einer Seite vorgesehener Anschlag würde zu großen Seitenkräften führen, die auf das Gewinde und die Schraube übertragen wurde.

Zwischen der Halteplatte 15 und der Mutter 11 ist ein Spiel vorhanden, so daß sich die Mutter 11 in ihrer als Kugelbuchsen ausgebildeten Lagerung bewegen kann.

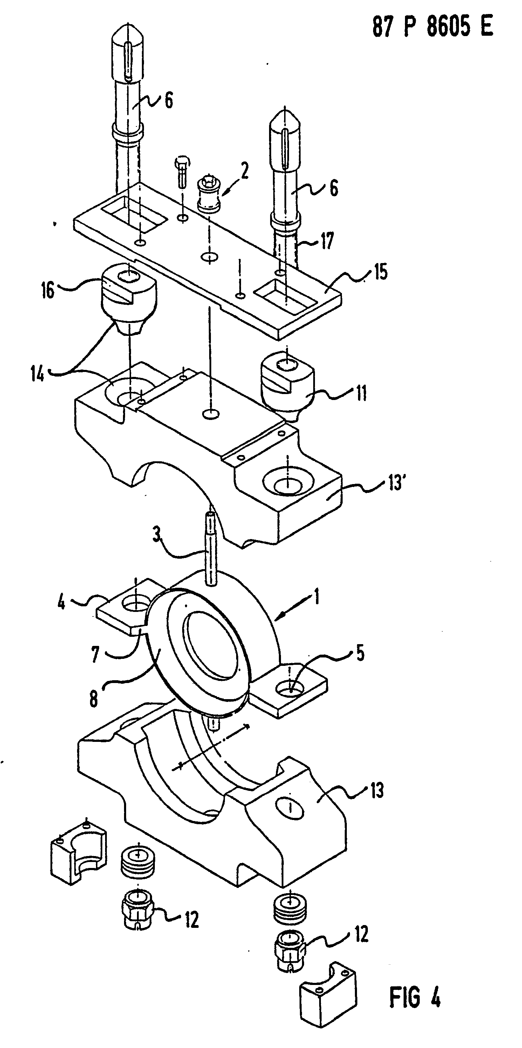

In FIG 4 ist die Lagerung der Muttern als Einzelheit dargestellt. Wenn die Mutter 11 sich in ihre sphärische Lagerung bewegt und die Schraube 6 wird auf Zug beansprucht, so werden Reibungskräfte in der Lagerung erzeugt und es wird über die Schraube 6 ein Moment auf die Mutter 11 übertragen, d.h. daß ein Moment von der Schraube 6 über das Gewinde 17 an die Mutter übertragen wird. Diese Momente sind sehr hoch und rufen in Abhängigkeit von den Reibungskoeffizienten Biegespannungen in der Schraube hervor, die die gleiche Größe haben wie direkte Zugkräfte. Es ist daher notwendig, daß Seitenkräfte aufgenommen werden können.

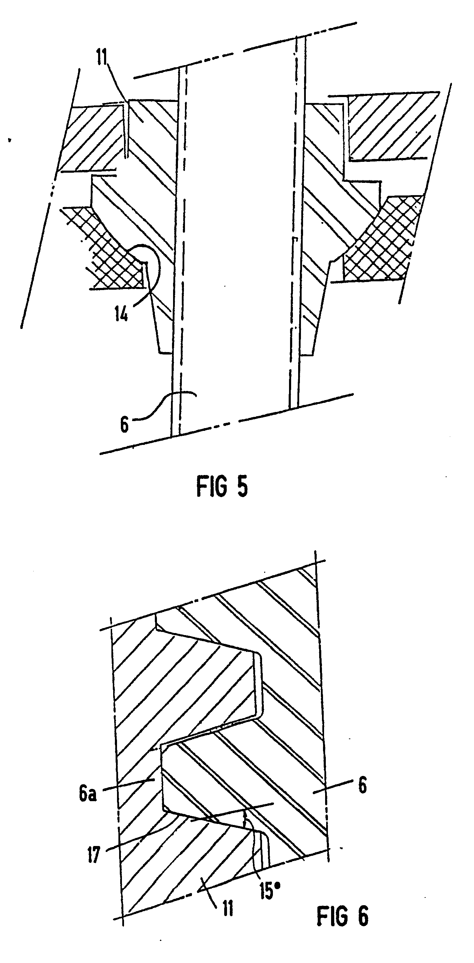

Um dies zu erreichen, sind - wie FIG 6 zeigt - besondere Maßnahmen getroffen. Für das Gewinde 17 ist ein Flankenwinkel von 15° verwendet, der eine Standardgröße ist, wogegen die Spitze und das Spiel modifiziert wurde, so daß man einen Kontakt zwischen der Spitze des Gewindes der Schraube und dem Boden des Gewindes der Mutter erreichen kann, ohne daß jedoch die Flanken an beiden Seiten (oben und unten) in Kontakt kommen. Dadurch werden hohe Reibungskräfte vermieden, die auftreten würden, falls die Flanken an beiden Seiten in Kontakt kommen. Hohe Reibungskräfte würden das Anzugsmoment zum Anziehen oder Lösen der Schraube für die Überwindung der Reibung verbrauchen.

Um die einzelnen Konstruktionsdetails näher darzustellen und ihre Funktionen kennenzulernen, werden im folgenden die einzelnen Stufen bei der Montage der Unterwasserkupplung erläutert. Die Demontage erfolgt im wesentlichen in der umgekehrten Reihenfolge. Zur Montage und Demontage wird für das Ausführen der einzelnen Arbeitsstufen ein Werkzeug eingesetzt, das noch näher beschrieben wird.

Wie FIG 3 zeigt, werden bei der Montage die beiden Flansche 18 der zwei miteinander zu kuppelnden Körper in einem solchen Abstand voneinander gehalten, daß die Kupplungsteile zwischen die Flansche 18 geführt werden können. Dabei steht vorzugsweise der Flansch 18 des einen Körpers, z.B. der linke fest, während der rechte Flansch 18 nach außen geschoben wurde.

Nach dem Einführen der Kupplungsteile gemäß der Erfindung in den Raum zwischen den beiden Flanschen 18, werden sie soweit gegen den feststehenden Flansch auf der linken Seite bewegt, daß die konische bzw. kegelstumpfförmige Anlagefläche 8 an der Dichtungsscheibe 1 und die Umfangsfläche 19 auf dem Flansch 18 in Eingriff kommen (FIG 2). Die Dichtungsscheibe 1 paßt sich dabei der Position des Flansches 18 an, wobei während der Bewegung der Dichtungsscheibe 1 aufgrund der kreuzförmigen Aufhängung 3, 21, 4 auch verhindert wird, daß sie sich verdreht. Die Positionierzapfen 20 (FIG 1) und Dichtungselemente 9 kommen mit ihren entsprechenden Sitzen in Eingriff. Die Axialkraft, die hier wirksam wird, ist gering, da es sich im wesentlichen um eine Parallelverschiebung der Kupplung mit der Dichtungsscheibe 1 handelt.

Der andere Flansch 18 an dem Körper auf der rechten Seite wird dann gegen die Dichtungsscheibe 1 geführt. Dieser Flansch 18 ist flexibel gelagert und kann sich der Position des ersten Flansches 18 anpassen, auch unter Berücksichtigung einer Drehung. Die Kraft, mit der der andere Flansch geführt wird, kann relativ groß sein.

Die Kraft, mit der die Kupplung geführt wird, wird dann weggenommen. Die Kupplung kann nun angezogen werden. Dies erfolgt durch eine synchrone Drehung der beiden Schrauben 6. Wenn die Schraube 6 für das Anziehen gedreht werden, werden die beiden Kupplungshälften 13 zusammengebracht, aber wegen des Gewichtes ist die Kupplung an ihren Haltepunkten an den Schrauben 6 aufgehängt, so daß nur die obere Kupplungshälfte 13 heruntergebracht wird. Wenn diese in Kontakt mit dem Flansch gekommen ist und somit sich nicht mehr bewegen kann, wird die andere Kupplungshälfte 13 sich mit der Drehung der Schrauben 6 nach oben bewegen und wird von ihrer Haltepositionen gehoben. Aufgrund ihrer konischen Flächen preßt die Kupplung die beiden Flanschhälften gegeneinander.

Man kann nun einen äußeren Drucktest machen, indem eine Flüssigkeit über das Ventil 3b durch die Kanäle 3a (Lochbohrung) in den Aufhängegestängen 3 und 1a in der Dichtungsscheibe 1 hindurchgeschickt wird und eine Menge Flüssigkeit in den Raum zwischen den Dichtungen 10 eingegeben wird. Die Hohlbohrung wird dann abgesperrt und ein eventueller Druckabfall wird registriert, was auf ein Leck hindeutet.

Die Zeichnung zeigt, wie vorhin erwähnt, nur eine Ausführungsform der Erfindung, es ist eine Reihe von Modifikationen hinsichtlich der Ausgestaltung der Teile möglich.

Die Dichtungselemente 9 und 10 und der Positonierzapfen 20 sind mit einem Bund 10a bzw. 20b auf der Seite ausgerüstet, die zuerst an den Flansch geführt wird. Dadurch wird verhindert, daß die Dichtungen 9, 10 oder der Positionierzapfen 20 bei der Berührung mit dem Flansch herausgepreßt wird.

Bei dem Auseinanderkuppeln von zwei Körpern, die je einen Flansch 18 aufweisen, insbesondere von Rohren unter Wasser, ist es erforderlich, daß die beiden Enden der zu kuppelnden Körper bzw. Rohre dicht beieinander liegen, wobei es wesentlich ist, daß die Längsachsen der beiden zu kuppelnden Körper miteinander fluchten und so zusammengeschoben werden können, daß die zwei Klemmbackenhälften 13, 13' die beiden Flansche 18 umgreifen und somit eine dichte Kupplung hergestellt werden kann.

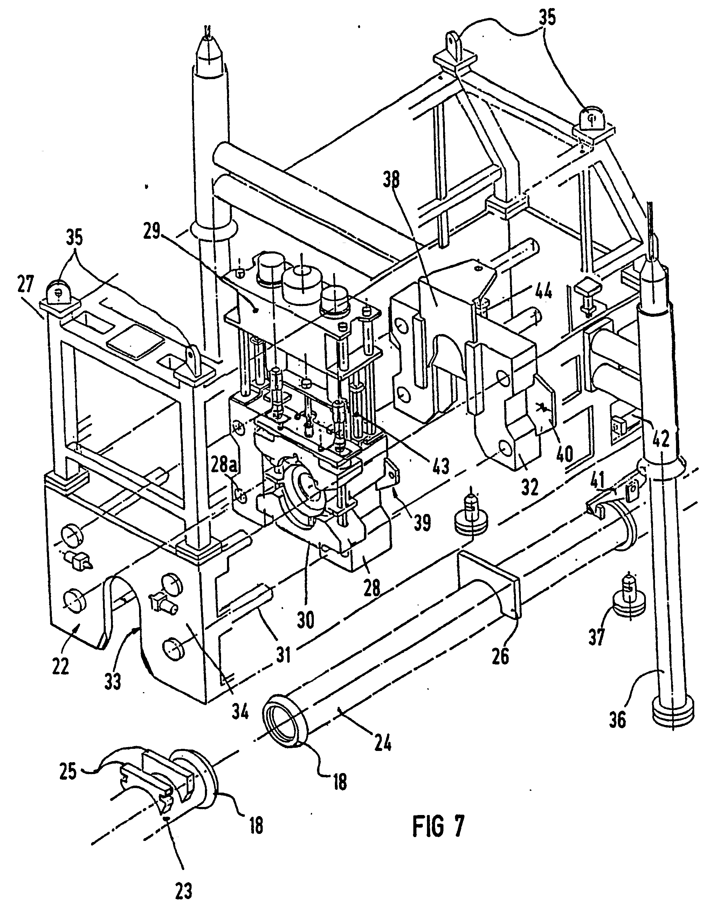

Um dies zu erreichen, enthält die Anordnung zum Kuppeln von zwei je einen Flansch 18 aufweisenden Körpern, insbesondere von zwei Rohren unter Wasser, ein fernsteuerbares Werkzeug, mit dem eine Montage bzw. Demontage vorgenommen wird (FIG 7). Dieses Werkzeug besteht im wesentlichen aus einem Gestell 22 für die Anbringung der einzelnen Teile der Kupplung und für das Einrichten der beiden zu kuppelnden Körper. Hierzu sind am Gestell 22 parallel zu den Längsachsen der beiden Körper Führungsschienen 31 angeordnet, an denen die Dichtungsscheibe 1 mit den Klemmbackenhälften 13, 13' und mindestens ein Positioniergerät 32 für die beiden Körper verschiebbar angeordnet sind. Das Verschieben erfolgt vorzugsweise mit Hilfe einer druckmittelbetätigten Kolben/Zylindereinrichtung. Eine der Endwände des Gestells bildet ein weiteres Einstellelement für die beiden Körper.

Ferner hat das Gestell 22 eine Einrichtung für ein Grobpositionieren und Feststellen des Gestells 22 in einer vorgegebenen Lage zu einer Bodenstruktur, damit es in der richtigen Lage zu den zu kuppelnden Körpern gehalten werden kann. Dabei sind Positionierelemente für das Zusammenwirken mit einer Schablone auf dem Meeresboden vorgesehen.

Die erforderliche Verlegung der Körper bzw. der Rohre und die Kupplungsprozesse werden von der Wasseroberfläche aus mittels Fernsteuerung vorgenommen. An dem Gestell 22 sind Mittel zum Heben und Senken des Gestells 22 sowie Anschlüsse für Antriebe zum Kuppeln, Einrichtung und Justieren angeordnet.

Im folgenden wird anhand der FIG 7 das Kuppeln von als Rohre 23, 24 ausgebildeten Körpern beschrieben. Mit dem fernsteuerbaren Werkzeug wird die Dichtungsscheibe 1 mit den vormontierten Klemmbackenhälften 13, 13' (Kupplungsteilen 30) unter Wasser zwischen die Rohrenden geführt, die Rohrenden werden aneinander gebracht und gleichzeitig wird eine genaue Ausrichtung der Rohre 23, 24 vorgenommen. Danach werden die Rohrenden ferngesteuert zusammengekuppelt. Teile des Gestells 22 werden dann von den aneinander gekuppelten Bauteilen gelöst und das Werkzeug wird zur Wasseroberfläche gehoben und für einen neuen Kupplungsvorgang vorbereitet. Vor einer Demontage der Rohre 23, 24 kann mit entsprechenden Mitteln ein Drucktest der Kupplung durchgeführt werden.

Bei dem in FIG 7 dargestellten Werkzeug sind aus Gründen der Übersichtlichkeit Teile des Gestells 22, der Schienen und Bauelemente nicht vollständig gezeichnet, um die wesentlichen Merkmale der Erfindung besser erkennen zu lassen. Für einen Fachmann ist es nicht schwierig, die weggelassenen Elemente zu ergänzen.

Das Werkzeug umfaßt ein Gestell 22 mit rechteckiger Form, das Endteile und Versteifungsbalken in seiner Längsrichtung aufweist. Das Gestell 22 wird in Längsrichtung der Rohre 23, 24 positioniert. Das Rohr 23 ist festgehalten, wogegen das Rohr 24 eine gewisse Beweglichkeit hat und zum Rohr 23 herangezogen werden kann. Das Rohr 23 ist mit einem durch Platten gebildeten Anschlag 25 und das Rohr 24 mit einer Stoßplatte 26 ausgerüstet. Diese Platten wirken mit Teilen des Werkzeuges zusammen, wie im folgenden noch geschildert wird.

Das Gestell 22 des Werkzeuges ist in seinem oberen Teil mit einer Haube 27 nach Art eines Gerüstes versehen, die während des Arbeitsvorganges, d.h. beim Heranbringen der am Werkzeug angebrachten Kupplungsteile an der Montagestelle die aktiven Teile des Werkzeuges schützt. Die aus der Dichtungsscheibe 1 und den vormontierten Klemmbackenhälften 13, 13' bestehende Kupplung ist an einem Träger 28 angebracht, der in seinem oberen Teil die erforderliche Antriebseinheit 29 trägt, die erforderlich ist, um die Montagetätigkeit auszuführen. Diese Antriebseinheit umfaßt einen oder mehrere Motoren und eine Reihe von Getrieben. Sind die Kupplungsteile 30 auf dem Träger 28 angebracht, so werden sie auf den Führungsschienen 31, die in dem Gestell 22 montiert sind, in die vorgegebene Position gesteuert. Der Träger 28 ist in den Führungsschienen 31 gelagert, die durch zylindrische Aussparungen 28a hindurchgeführt sind. Es ist günstig, vier Führungsschienen 31 zu verwenden und diese an den Endwänden des Gestells 22 zu befestigen. Die Führungsschienen 31 sind der Übersichtlichkeit halber teilweise weggeschnitten, die Längsachse ist jedoch angedeutet.

Auf den Führungsschienen 31 ist ferner ein Positioniergerät 32 verschiebbar gelagert. Dieses Positioniergerät 32 ist im Bereich seiner Mitte mit einem Greifer 38 ausgerüstet, der das Rohr umfassen und es mit zwei Backen greifen kann, die quer zum beweglichen Greifer 32a mit Hilfe einer hydraulischen Einrichtung zusammengeführt werden können. Der Greifer 32a wirkt mit der Platte 26 auf dem Rohr 24 zusammen.

Das Werkzeug wird in fixierter Stellung zum Rohr 23 durch den Anschlag 25 mittels der mit einem Ausschnitt 33 versehenen Wand durch Schlösser 34 festgehalten. Diese Fixierung der Wand mit dem Ausschnitt 33 des Werkzeuges am Rohr 23 bildet die Basis für das genaue Einziehen des Flansches 18 mit Hilfe der Stoßplatte 26.

Zum Kuppeln der beiden Rohre 23, 24 wird das Werkzeug mit den Kupplungsteilen 30 von der Wasseroberfläche aus versenkt. Das Werkzeug ist im oberen Teil des Gerüstes 27 mit Ösen 35 versehen und wird an einer nicht dargestellten Hebeeinrichtung aufgehängt. Es wird ferngesteuert abgesenkt und in eine vorgegebene Position auf dem Meeresgrund gebracht, wobei Stützen 36, die an dem Werkzeug angeordnet sind, zur genauen Positionierung dienen. Diese Stützen 36 sind an ihren unteren freien Enden für ein Zusammenwirken mit einem beispielsweise nach Art eines Zapfens ausgebildeten Rastglied 37 ausgebildet, das am Meeresgrund angebracht ist. Dadurch kann das Werkzeug am Kupplungsort in die richtige Lage gebracht werden. Am Werkzeug sind Justiereinrichtungen angebracht, so daß das Endteil des Gestells 22 mit der einen Ausschnitt 33 aufweisenden Wand in einer gewünschten Lage über den Anschlägen 25 an dem festen Rohr 23 fixiert werden kann. Vor dem Zusammenkuppeln werden die Kupplungsteile 30 in eine vorgegebene Lage zwischen die beiden Flansche 18 gebracht. Dann wird das Positioniergerät 32 in die Arbeitsstellung zu der Stoßplatte 26 am Rohr 24 hingeführt.

Nach diesen Einstellungen kann das Gestell 22 auf die Rohre 23 und 24 abgesenkt und die einzelnen Teile in ihre Arbeitspositionen gebracht werden. Für die Versetzung auf den Führungsschienen 31 werden in der Zeichnung nicht gezeigte hydraulische Zylinder/Kolbeneinrichtungen verwendet. Diese können an den Ösen 39 des Kupplungsträgers 28 bzw. an den Ösen 40 des Positioniergerätes 32 befestigt sein.

Das Positioniergerät 32 wird nun mit dem Rohr 24 in Eingriff gebracht, indem der verschiebbare Greifer 32a mit der Stoßplatte 26 auf dem Rohr 24 zusammenwirkt, wobei dieses in die vorgegebene Achsrichtung des Rahmens bewegt wird, so daß die gewünschte Ausrichtung in der Längsrichtung mit Hilfe der hydraulischen Kolben/Zylinderanordnung erreicht wird. Mit Hilfszylindern 42 wird das Rohr 24 solange in Längsrichtung verschoben, bis der gewünschte Kontakt zwischen den Kupplungsteilen 30 und dem Rohrflansch 18 des Rohres 23 erreicht wird (vor der Verschiebung der Kupplungsteile 30 durch den Kupplungsträger 28 wurden die richtige Höhenlage zum Flansch 18 eingestellt). Bei diesem Arbeitsvorgang werden relativ hohe Kräfte von beispielsweise 4 bis 5 t Druck ausgeübt. Da das Rohr 24 dadurch eingespannt ist, daß es in das Positioniergerät 32 eingeschoben ist, wird es in dieser Stellung mittels des Schließhakens 41 verriegelt. Der Schließhaken 41 wird vor dem Vorschieben des Rohres 24 gelöst.

Der eigentliche Kupplungsvorgang wird nun - wie bereits beschrieben - ausgeführt. Danach wird die Antriebseinrichtung von den Kupplungsteilen mit Hilfe von hydraulischen Kolben/Zylinderanordnungen 43 abgehoben und die Einstelleinrichtung in Freigabestellung gebracht, in dem der Zylinder 44 beaufschlagt wird.

Alle Arbeitsoperationen, d.h. die Steuerung der Motoren und hydraulischen Kolben/Zylinderanordnungen wird durch eine Fernsteuerung von der Wasseroberfläche aus vorgenommen. Derartige Fernsteuerungen sind an sich bekannt und werden hier nicht näher beschrieben.

Nach Anheben der Antriebseinheit 29 mit Hilfe der Kolben/Zylinderanordnung 43 sowie dem Freimachen der Halterung zwischen den Schrauben der Kupplungsteile und dem Kupplungsträger sowie nach dem Freimachen der betreffenden Greif- und Schließeinrichtungen des Werkzeuges, kann dieses wieder an die Oberfläche gehoben werden und für einen weiteren Einsatz mit neuen Kupplungsteilen versehen werden.

Die FIG 7 zeigt nur das Prinzip für den erfindungsgemäßen Aufbau des Werkzeuges. Unterschiedliche Ausführungen einzelner Bauelemente liegen innerhalb des Rahmens der Erfindung.

## Ansprüche

1. Anordnung zum Kuppeln von zwei je einen Flansch (18) aufweisenden Körpern, insbesondere von zwei Rohren unter Wasser mittels eines fernbedienbaren Werkzeugs, bei der

    a) eine Dichtungsscheibe (1) mit einem doppel-T-förmigen Querschnitt zwischen den zu kuppelnden Flanschen (18) angeordnet ist,

b) zwei Klemmbackenhälften (13, 13') vorgesehen sind, welche die Flansche (18) sowie die Dichtungsscheibe (1) übergreifen und mit Öffnungen versehen sind, die in der Ebene der Dichtungsscheibe (1) oder parallel dazu liegen,

c) die Dichtungsscheibe (1) an den Klemmbackenhälften (13, 13') aufgehängt ist und

d) durch die Öffnungen an den Klemmbackenhälften (13, 13') Schrauben (6) geführt und die Klemmbackenhälften (13, 13') durch Muttern (11) verspannt sind.

2. Anordnung nach Anspruch 1, bei der an der Dichtungsscheibe (1) eine Aufhängestange (3) sowie eine Stützstange (21) einander gegenüberliegend in einer gemeinsamen Achse angeordnet sind und in einer senkrechten Symmetrieebene hierzu zwei Ohren (4) mit Öffnungen (5) vorgesehen sind, durch die die Schrauben (6) hindurchgeführt sind, welche die Klemmbackenhälften (13, 13') durchsetzen, wobei die Stützstange (21) sowie die Aufhängestange (3) in Aussparungen an den Klemmbackenhälften (13, 13') beweglich geführt sind.

3. Einrichtung nach Anspruch 1, bei der die Aufhängestange (3) der Dichtungsscheibe (1) an der Klemmbackenhälfte (13') mit Spiel aufgehängt ist, wobei an dem der Dichtungsscheibe (1) abgewandten Ende eine Schulter (2a) vorgesehen ist und zwischen der Schulter (2a) und der Klemmbackenhälfte (13') ein federndes Element (2) angeordnet ist.

4. Anordnung nach Anspruch 1, bei der die Flansche (18) eine kegelstumpfförmige Umfangsfläche (19) haben und die Dichtungsscheibe (1) einen die Flansche (18) übergreifenden Außendurchmesser aufweist, wobei die Innenseiten der Auskragungen der Dichtungsscheibe (1), welche die Flansche (18) übergreifen, als kegelstumpfförmige Anlageflächen (8) ausgebildet sind

5. Anordnung nach einem der Ansprüche 1 bis 4, bei der die Klemmbackenhälften (13, 13') an ihren einander zugewandten Innenseiten eine Ringnut (13a) haben, in welche die Flansche (18) und die Dichtungsscheibe (1) hineinragen, wobei die Breite des Nutgrundes (13b) zumindest annähernd der äußeren Dicke der Dichtungsscheibe (1) entspricht.

6. Anordnung nach Anspruch 1, bei der die Köpfe (12) der Schrauben (6) und/oder die Muttern (11) in den Klemmbackenhälften (13, 13') durch Kugelbuchsen 14 gelagert und die Muttern (11) gegen Verdrehung gesichert sind, während die Schrauben (6) drehbar ausgebildet sind, wobei zur Sicherung der Muttern (11) insbesondere eine Einrichtung dient, bei der an den Klemmbackenhälften (13, 13') Halteplatten (15) angeordnet sind, die eine koaxial zu den Muttern (11) vorgesehene Aussparung aufweisen, in der die Muttern (11) gegen Verdrehung durch zwei gegenüberliegende Anschläge mit Spiel gesichert sind.

7. Anordnung nach Anspruch 1 bis 6, bei der eine Schraube (6) rechtsgängig und die andere Schraube (6) linksgängig ist.

8. Anordnung nach Anspruch 1 und 2, bei der in der Dichtungsscheibe (1) mindestens ein Kanal (1b) vorgesehen ist, der über einen axial verlaufenden Kanal (3a) in der Aufhängestange (3) mit einem Ventil (3b) für das Anschließen einer Druckprüfeinrichtung der Kupplungsanordnung nach der Montage verbunden ist.

9. Anordnung nach Anspruch 1, 6 oder 7, bei der die Gewinde (17) der Schrauben (6) für die Aufnahme von Seitenkräften mit einem Flankenspiel ausgeführt sind, die einen Anschlag (6a) zwischen der Mutter (11) und der Schraube (6) auf der Gewindespitze der Schraube (6) ergibt (FIG 6).

10. Anordnung nach Anspruch 1, bei der an der Dichtungsscheibe (1) zusätzlich zu einem zentralen Dichtungselement (9) mindestens ein weiteres Dichtungselement (10) und mindestens ein Positionierzapfen (20) angeordnet sind, die Achse des Positionierzapfens (20) und des Dichtungselementes (10) senkrecht zu der Ebene der Dichtungsscheibe gerichtet sind, und in den Flanschen (18) der zu kuppelnden Körper für die Einführung des Positionierzapfens (20) eine entsprechende Aussparung (20a) vorgesehen ist, wobei der Positionierzapfen (20) und/oder die Dichtungselemente (9, 10) mit einem Bund (10a, 20b) versehen sind, der sich auf derjenigen Seite der Dichtungsscheibe (1) befindet, die während der Montage zuerst gegen den Flansch (18) geführt wird.

11. Anordnung nach Anspruch 1 mit einem Werkzeug zur fernsteuerbaren Montage bzw. Demontage der Kupplungsteile, bei der ein Gestell (22) mit Führungsschienen (31) vorgesehen ist, an denen ein Träger (28) für die Kupplungsteile (30) mit einer Antriebseinheit (29) und mindestens ein mit einem Antrieb ausgerüstetes Positioniergerät (32) für mindestens einen der beiden zu kuppelnden Körper verschiebbar gelagert sind, und das Gestell (22) Mittel zum Heben und Senken sowie eine Einrichtung zum Grobpositionieren und Feststellen des Gestells (22) in einer vorgegebenen Lage besitzen und der Träger (28) für die Kupplungsteile (30) sowie das Positioniergerät (32) lösbar Anschlüsse für die Antriebe hat.

12. Anordnung nach Anspruch 11, bei der einer der zu kuppelnden Körper mit einem Anschlag (25) zum Feststellen des Gestells (22) versehen ist.

13. Anordnung nach Anspruch 11, bei der an der Antriebseinheit (29) ein Antrieb zum Lösen von dem Träger (28) für die Kupplungsteile (30) angeordnet ist.

14. Verfahren zum Kuppeln von zwei je einen Flansch (18) aufweisenden Körpern, insbesondere von zwei Rohren unter Wasser, mit einem fernsteuerbaren, als Gestell (22) ausgebildeten Werkzeug, an dem ein mit einem Antrieb versehenes Positioniergerät (32) und ein mit einer Antriebseinheit (29) ausgerüsteter Träger (28) für Kupplungsteile (30) verschiebbar gelagert sind, die aus einer Dichtungsscheibe (1) und Klemmbackenhälften (13, 13') bestehen, bei dem

a) der erste Körper fest angeordnet und der zweite Körper zumindest annähernd fluchtend hierzu beweglich angeordnet wird, wobei die Flansche einen vorgegebenen Abstand aufweisen,

b) die Kupplungsteile (30) an dem Träger (28) angeordnet werden,

c) das Gestell (22) mittels einer Hebeeinrichtung in eine vorgegebene Position über den Flanschen (18) der beiden zu kuppelnden Körper gebracht und fixiert wird,

d) der Träger (28) in eine Lage gebracht wird, in der die Kupplungsteile (30) in einer senkrechten Ebene zwischen den beiden Flanschen (18) zu liegen kommen,

e) das Positioniergerät (32) in eine Lage senkrecht über dem zweiten Körper gebracht wird,

f) das Gestell (22) auf die beiden zu kuppelnden Körper abgesenkt wird, wobei es mit dem fest angeordneten ersten Körper in Eingriff gebracht wird und das Positioniergerät (32) den zweiten Körper erfaßt und ausrichtet,

g) die Kupplungsteile (30) durch Längsverschieben ihres Trägers (28) gegen die Flansche (18) des ersten Körpers geschoben werden, so daß die Dichtungsscheibe (1) an dem Flansch (18) des ersten Körpers anliegt,

h) der zweite Körper mittels des Positioniergerätes (32) durch eine Längsverschiebung gegen die Dichtungsscheibe (1) geschoben wird,

i) die Klemmbackenhälften (13, 13') gegeneinander verschraubt werden und

k) der Träger (28) sowie die Antriebseinheit (29) von den Kupplungsteilen (30) getrennt, das Positioniergerät (32) von dem zweiten Körper gelöst und das Gestell (22) abgehoben wird.

87 P 8605 E

FIG 1

FIG 2

87 P 8605 E

FIG 3

87 P 8605 E

FIG 4

87 P 8605 E

FIG 5

FIG 6

EP 0 373 250 A1

87 P 8605 E

FIG 7

Europäisches Patentamt

**EUROPÄISCHER RECHERCHENBERICHT**

Nummer der Anmeldung

EP 88 12 1044

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 481 396 (WILLIAMS) <br> * Spalte 4, Zeile 15 - Spalte 6, Zeile 12; Figuren * | 1,10-14 | F 16 L 37/00 |
| A | --- | 2,4,13 | |
| X | FR-A-2 468 060 (MORRILL) <br> * Figuren; Seite 7, Zeile 13 - Seite 10, Zeile 28 * | 1,11,14 | |
| A | ----- | 6,9,13 | |

**RECHERCHIERTE SACHGEBIETE (Int. Cl.4)**

F 16 L

Der vorliegende Recherchenbericht wurde für alle Patentansprüche erstellt

| Recherchenort | Abschlußdatum der Recherche | Prüfer |
|---|---|---|
| DEN HAAG | 14-03-1989 | HUBEAU M.G. |